(19) Europäisches Patentamt
European Patent Office
Office européen des brevets

(11) **EP 3 918 196 B1**

(12) **EUROPEAN PATENT SPECIFICATION**

(45) Date of publication and mention
of the grant of the patent:
**31.05.2023 Bulletin 2023/22**

(21) Application number: **20706102.9**

(22) Date of filing: **30.01.2020**

(51) International Patent Classification (IPC):
**F03D 9/46** *(2016.01)*

(52) Cooperative Patent Classification (CPC):
**F03D 9/46; F03D 3/005;** F05B 2240/9113;
F05B 2240/913; Y02B 10/30; Y02E 10/728;
Y02E 10/74; Y02E 70/30

(86) International application number:
**PCT/EP2020/052326**

(87) International publication number:
**WO 2020/157219 (06.08.2020 Gazette 2020/32)**

(54) **WIND TURBINE SUITABLE FOR MOUNTING ON EXISTING MAST SUCH AS STREET LAMP**

WINDTURBINE GEEIGNET FÜR DIE MONTAGE AUF EINEM VORHANDENEN MAST, Z.B. EINER STRASSENLEUCHTE

ÉOLIENNE POUVANT ÊTRE MONTÉE SUR UN MÂT EXISTANT TEL QU'UN LAMPADAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2019 GB 201901386**

(43) Date of publication of application:
**08.12.2021 Bulletin 2021/49**

(73) Proprietor: **Alpha 311 Limited
Ospringe
Faversham
Kent ME13 8TS (GB)**

(72) Inventors:
• **SANDERSON, John
Faversham Kent ME13 8TS (GB)**
• **THOMPSON, Barry
Whitstable Kent CT5 4QY (GB)**

(74) Representative: **Bridle, Andrew Barry
Bridle
Intellectual Property Limited
6F Thomas Way
Lakesview Internat. Business Park
Canterbury, Kent CT3 4JZ (GB)**

(56) References cited:
GB-A- 2 496 466          NL-C2- 1 037 011
US-A1- 2011 107 684     US-A1- 2014 252 773

**Description**

The present invention relates to a wind turbine, and in particular to a wind turbine that may be attached to a vertical post of an item of street furniture.

Wind turbines are well known. They tend to be mounted on bespoke masts which are located either on land or at sea during the installation process of the turbine. This increases the costs of both the wind turbine itself, as a bespoke mast must also be manufactured, and the costs of installation, as appropriate ground works/foundations must be prepared during the installation process.

It would thus be desirable to mount wind turbines on existing masts or posts. Examples of turbines mounted on posts and masts are known from US2014252773 A1, NL1037011C C2, GB2496466 A and US2011107684A1.

Additionally, it is known that vehicles travelling on roads generate movement in the surrounding air. In other words, they generate their own "wind" or airflow as a result of their motion. The skilled person will appreciate that many road systems already include items of street furniture that are located adjacent to the roadways. Such items of street furniture typically include posts that support or carry signs, lights, cameras, etc at the top of the post.

According to a first aspect of the invention, there is provided a wind turbine comprising a two-part collar; a two-part turbine blade assembly, wherein the two parts are coupled together and the turbine blade assembly is rotatably coupled to the collar; and an electrical generator comprising a rotor and a stator, wherein the electrical generator is operatively coupled to the turbine blade assembly such that rotation of the turbine blade assembly relative to the collar results in a corresponding rotation of the rotor; wherein the wind turbine further includes an inner spacer located internally of each collar.

The provision of a two-part collar means that it can be attached or retrofitted to an existing mast or post, such as an existing post of an item of street furniture. Similarly, the two-piece turbine blade assembly may be rotatably coupled to the two-piece collar during the installation process and does not need to be pre-assembled with the collar.

In accordance with the invention, the claimed wind turbine may be fitted to any pre-existing post or mast and thus does not need an integral post or mast of its own.

In an embodiment of the invention, the wind turbine includes a pair of collars and the turbine blade assembly is rotatably coupled to both collars. In such embodiments, the pair of collars typically includes an upper collar and a lower collar, wherein an upper portion of the turbine blade assembly may be rotatably coupled to the upper collar and a lower portion of the turbine blade assembly may be rotatably coupled to the lower collar.

The turbine blade assembly is suitably cylindrical. Such an arrangement may include a blade assembly body which is cylindrical and defines a central bore, wherein the longitudinal axis of the central bore defines an axis of rotation for the blade assembly. In such embodiments, an upper portion of the central bore may be rotatably coupled to an upper collar and a lower portion of the central bore may be rotatably coupled to a lower collar.

In order to reduce or minimise friction between the blade assembly and the or each collar, the wind turbine may include a bearing arrangement between the or each collar and the turbine blade assembly. For example, the or each bearing arrangement may include a rolling-element bearing, such as ball bearings or needle bearings (i.e. bearings which include spherical or needleshaped rotating elements). The reduction in friction as a result of the or each bearing arrangement between the collar(s) and the blade assembly increases the efficiency of the wind turbine.

In embodiments of the invention, the bearing arrangement is carried by or forms part of the or each collar. In other words, each collar may include the bearing arrangement.

In a further embodiment of the invention, the turbine includes a two-part upper collar comprising an upper bearing arrangement, a two-part lower collar comprising a lower bearing arrangement and a cylindrical blade assembly, wherein an upper portion of the blade assembly is rotatably coupled to the upper bearing arrangement and a lower portion of the blade assembly is rotatably coupled to the lower bearing arrangement.

The skilled person will appreciate that pre-existing post or masts may have a variety of different outer diameters and outwardly facing surface configurations (e.g. cylindrical, conical or polygonal). Accordingly, the wind turbine further includes an inner spacer or sleeve which is located internally of the or each collar. The spacer or sleeve will permit the collar to be secured to a specific post or mast. Thus, the spacer or sleeve will reduce the internal diameter of the or each collar and provide an inwardly facing surface for the collar which conforms to both the shape and size of the externally facing surface of the post or mast.

Accordingly, a single uniform two-part collar may be provided, which is then adapted to fit specific posts or mast via the use of different spacers or sleeves. This is useful in embodiments in which the collar includes a bearing arrangement.

As with each collar and the turbine blade assembly, the spacer/sleeve is suitably a two-part component. In this way, the spacer/sleeve may be retrofitted to a pre-existing post or mast with the collar.

In order to secure together the two parts of the collar (and optionally also the two parts of the inner spacer), each part of the collar (and optionally also each part of the inner sleeve) may include a fixing element. The fixing element may be, for example, a simple through bore shaped to receive a fixing such as a screw or nut and bolt arrangement or it may include a male and female fixing arrangement, wherein the male fixing includes a projecting element and the female fixing includes a bore configured to receive the male fixing. In an embodiment of the invention, each part may include both a male and female fixing element. In this way both parts may be identical and may be assembled by inverting one of the parts such that each male fixing aligns with the corresponding female fixing. The skilled person will appreciate the benefits of having a single component which forms both parts of the two-part arrangements.

In an embodiment of the invention, the turbine blade assembly defines an axis of rotation and includes two or more blades which project outwardly from the axis of rotation. For example, the turbine blade assembly may comprise a cylindrical inner body and a plurality of blades that project outwardly from the inner body. In such embodiments, each blade may comprise a proximal edge which is substantially the same length as the cylindrical inner body and a distal edge which is spaced from the cylindrical inner body, wherein the proximal edge of each blade is secured to the cylindrical inner body.

Additionally or alternatively, the turbine blade assembly may include an upper body member and a lower body member and the blades may each be located between the upper and lower body members.

Each blade may be aligned radially with the axis of rotation (e.g. a plane of the blade is oriented radially with respect to the axis of rotation) or they may be angled with respect to a corresponding radius from the axis of rotation. For example, each blade may subtend an angle from the corresponding radius which is from 10° to 75°. In the context of the present invention, the term "each blade may subtend an angle ..." refers to a plane defined by the blade which passes through the proximal end and the distal end of the blade, wherein the defined plane of the blade intersects the respective radius at an angle. Such an arrangement may be advantageous when the wind direction is typically in a specific direction. For example, if the wind turbine is located adjacent to a road, the vehicles travelling along the road will cause air movement in a specific direction and the blades of the wind turbine may be angled to maximise the energy capture from this air movement. In an embodiment of the invention, the angle between the blades and the corresponding radii from the axis of rotation may be from 20° to 60°, from 30° to 50° or from 30° to 45°.

In connection with the individual blades used in the turbine blade assembly, these are suitably straight blades. In other words, the longitudinal axis of the blade is substantially linear. Thus, the blades may be substantially planar or they may have a transverse profile that is curved or has a variable thickness, such as an aerofoil shape in order to maximise the energy efficiency of the wind turbine.

In an embodiment of the invention, the turbine blade assembly carries a drive gear, the electrical generator rotor includes a rotor gear wheel, and the rotor gear wheel is meshed with the turbine blade assembly drive gear. In this way, rotation of the drive gear as a result of the rotation of the turbine blade assembly causes a corresponding rotation of the rotor gear wheel and in turn the rotor itself. The skilled person understands that rotation of the rotor with respect to the stator of an electrical generator generates electrical energy in the conventional manner.

In an embodiment of the invention, the turbine includes a gearbox located between the turbine blade assembly and the electrical generator, for example, located between a rotating portion of the turbine blade assembly, such as a cylindrical inner body, and the rotor of the electrical generator. In this way, the rotation of the rotor may be optimised by the gearbox.

The electrical energy produced by the electrical generator is suitably stored in an energy storage arrangement for later use. Accordingly, in an embodiment of the invention, the electrical generator includes an electrical output connected to an electrical energy storage arrangement. The electrical energy storage arrangement may be located locally to the wind turbine or it may be located remote from the wind turbine.

The electrical energy storage arrangement suitably comprises one or more rechargeable batteries. The or each battery may be located within a housing to protect them from environmental conditions, for example to protect them against precipitation, dust, etc. Furthermore, it is known that battery performance degrades in cold temperatures. Accordingly, the housing may be thermally insulated.

In a further embodiment of the invention, the turbine further includes a stationary housing body coupled to the collar. The stationary housing may protect the turbine to some extent from precipitation and atmospheric pollutants. It may also be used to house further components associated with the invention. For example, the housing may house one or more sensors associated with the performance of the wind turbine. Such sensors may sense the electrical energy generated by the generator, condition of the batteries, energy reserves within the batteries, atmospheric conditions, etc. Such sensors may be connected to a remote signal receiving station. Such a connection may be wired or it may be wireless, in which case, the housing may further house wireless communications equipment, such as a wireless transmitter that may utilise wireless data transmission protocols and operate via a wireless network, such as a mobile phone network.

According to a second aspect of the invention, there is provided an item of street furniture comprising a vertical post and a wind turbine as defined anywhere herein in connection with the first aspect of the invention, wherein a first part of the two-part collar is located on one part of the post and a second part of the two-part collar is located on an opposite part of the post.

In an embodiment of the second aspect of the invention, the turbine blade assembly is suitably a cylindrical assembly. In such embodiments, the cylindrical blade assembly may be arranged vertically about the post. Thus, the longitudinal axis of the post may define the rotational axis of the turbine blade assembly.

As noted above, street furniture posts tend to have different external diameters if they are substantially cylindrical or they may have different cross-sectional shapes, such as hexagonal or octagonal. In order to provide a single common collar component, the invention includes an inner spacer or sleeve. Thus, according to the invention, an outwardly facing surface of the post is non-cylindrical; the turbine assembly includes an inner spacer located between the post and the two-part collar; the internal shape of the spacer corresponds to the shape of the outwardly facing surface of the post; and the outwardly facing surface of the spacer is cylindrical. It will be understood in an embodiment that the inwardly facing surface of the collar is cylindrical and sized to correspond to the outwardly facing surface of the spacer.

The item of street furniture is suitably located adjacent to a road. For example, it may comprise street lighting. The street lighting may be located on one side of a road or it may be located between opposing carriageways of a road, where the carriageways are separated by a barrier or other dividing arrangement.

The invention according to the first aspect of the invention may be affixed to an array of items of street furniture, such as street lights. For example, the wind turbine of the first aspect of the invention may be affixed to adjacent street lights or it may be fixed to alternating street lights (i.e. every other street light). Thus, according to a third aspect of the invention, there is provided an array of items of street furniture, wherein the array includes two or more items of street furniture as defined anywhere herein in connection with the second aspect of the invention; the array includes a single electrical energy storage arrangement and each of the electrical generators includes an electrical output which is connected to the electrical energy storage arrangement.

In an embodiment of the third aspect of the invention, the items of street furniture are street lights.

According to a fourth aspect of the invention, there is provided a method of attaching a wind turbine as defined anywhere herein in connection with the first aspect of the invention to a post forming part of an item of street furniture, the method comprising locating one part of the two-part collar on one part of the post, locating the second part of the two-part collar on an opposite part of the post, securing the two parts of the collar together, rotatably coupling the turbine blade assembly to the collar, and connecting the rotor of the electrical generator to the turbine blade assembly such that rotation of the turbine blade assembly relative to the collar results in a corresponding rotation of the rotor.

It will be appreciated that rotation of the rotor of the electrical generator results in the generation of electrical energy by conventional means.

The skilled person will appreciate that the features described and defined in connection with the aspects of the invention and the embodiments thereof may be combined in any combination, regardless of whether the specific combination is expressly mentioned herein. Thus, all such combinations are considered to be made available to the skilled person.

An embodiment of the invention will now be described, by way of example only, with reference to the accompanying drawings in which:

Figure 1 shows a front elevational view of a wind turbine according to the first aspect of the invention coupled to a street lamp post;
Figure 2 shows a cross-sectional view from above of an array of street lamp posts located in a central reservation portion of a road system;
Figure 3 shows an exploded view of the embodiment shown in Figure 1;
Figure 4a shows an exploded vertical cross-section taken through the upper collar shown in Figure 3;
Figure 4b shows an exploded horizontal cross-section taken through the embodiment shown in Figure 3;
Figure 5 shows a second embodiment of a wind turbine according to the first aspect of the invention coupled to a street lamp post; and
Figure 6 shows a graph indicating the annual power generation that may be possible using a number of wind turbines as shown in Figure 1, where the Y axis indicates the generated power in MWh and the X axis shows time in months.

For the avoidance of doubt, the skilled person will appreciate that in this specification, the terms "up", "down", "front", "rear", "upper", "lower", "width", etc. refer to the orientation of the components as found in the example when installed for normal use as shown in the Figures.

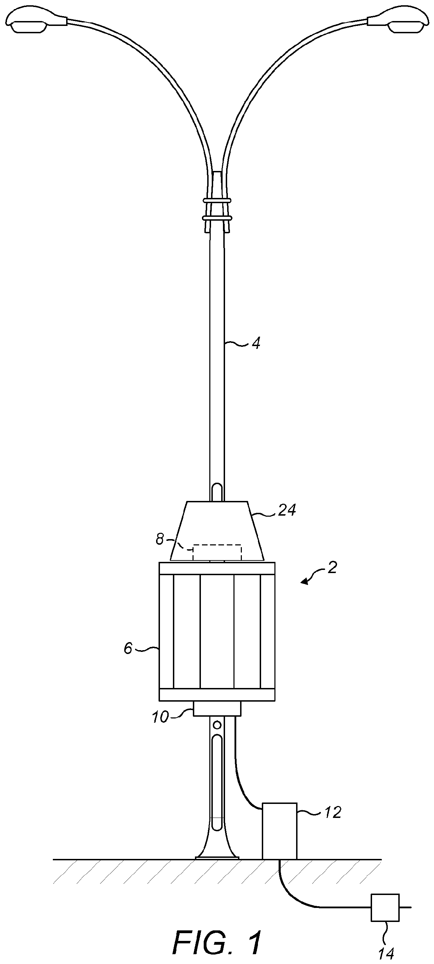

Figure 1 shows a wind turbine apparatus 2 attached to a post 4 forming part of a street light. The wind turbine apparatus 2 comprises a two-part turbine blade assembly 6 rotatably coupled to an upper two-part collar 8 and a lower two-part collar 10.

The lower collar 10 contains an electrical energy generator (not shown) which is generally known and contains a rotor that is driven to rotate via the rotation of the turbine blade assembly 6 and a stator. Electrical energy is generated in a conventional manner as a result of the rotation of the rotor relative to the stator. The electrical energy generated by the electrical generator flows to an electrical energy storage assembly in the form of a rechargeable battery arrangement 12, which may either be located at the base of the post 4 or located underground. An underground location of the rechargeable battery arrangement 12 would have the benefit of insulating the rechargeable battery arrangement 12 from the environment and providing a degree of security for it against damage or theft.

Excess electrical energy from the rechargeable battery arrangement may be fed into an external electrical grid 14, if desired.

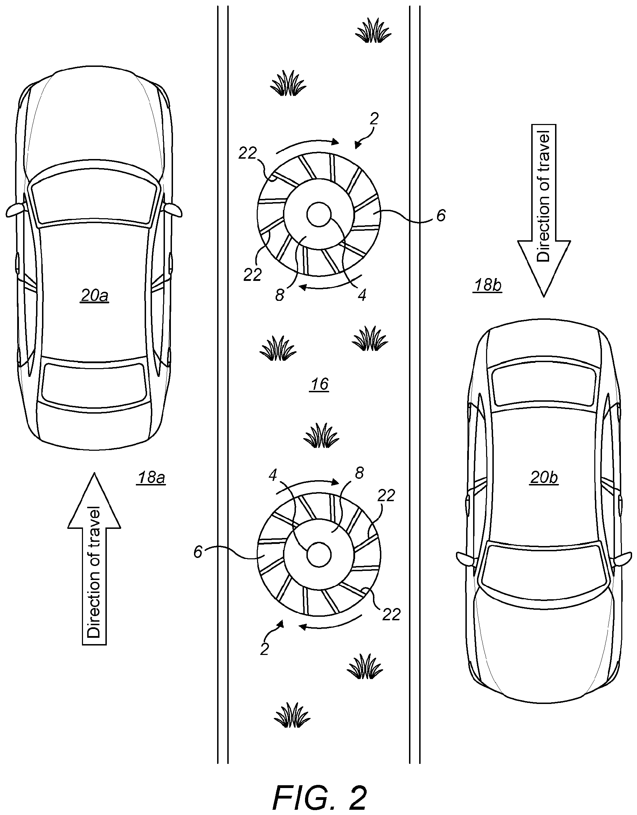

Figure 2 shows the location of an array of two wind turbine arrangements 2, wherein the two wind turbine arrangements are located on adjacent street light posts 4 which are in turn located in a central reservation portion 16 of a road system comprising a road 18a, 18b each side of the central reservation 16. The arrows in Figure 2 indicate the direction of travel of vehicles 20a, 20b using the roads 18a, 18b and the direction of rotation of the turbine blade assemblies 6.

The skilled person will appreciate that the movement of air generated by the vehicles 20a, 20b moving along their respective roads 18a, 18b causes the rotation of the turbine blade assemblies 6.

It will be noted from Figure 2 that blades 22 located within the turbine blade assemblies 6 are angled by 30° with respect to radii from the axis of rotation of the turbine blade assemblies 6. This angling of the blades 22 increases the efficiency with which the turbine blade assemblies are rotated by the air movements caused by passing vehicles 20a, 20b.

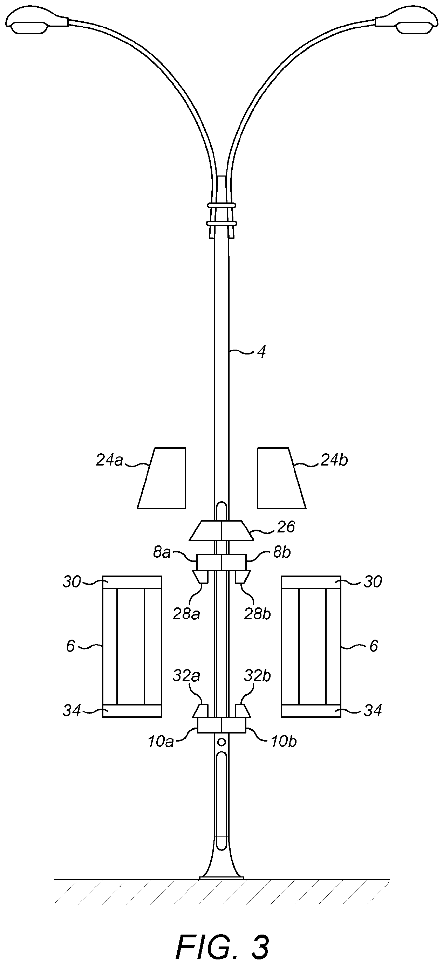

Figure 3 shows an exploded view of the apparatus 2 shown in Figure 1. The apparatus 2 includes a protective conical housing 24, which again is in two-part form to permit the retrofitting of the apparatus 2 to an existing street light post 4. The conical housing 24 comprises a first part 24a and a second part 24b which are secured together about the post 4 via conventional couplings (e.g. screws). The housing 24 houses and protects from the elements a sensor array 26, which is also in two part form. The housing 24 also protects from the elements the upper collar 8.

As shown in Figure 3, the upper collar 8 is in two parts and includes a first part 8a and a second part 8b which are secured together in a conventional manner (e.g. via screws or "nut and bolt" arrangement) about a portion of the post 4. Each of the collar parts 8a, 8b define on their lower portions a frustoconical bearing formed by a first bearing part 28a and a second bearing part 28b, which together engage a corresponding, inwardly facing, frustoconical upper portion 30 of the turbine blade assembly 6. A rotating element bearing (not shown) is located between the corresponding frustoconical bearing surfaces 28a, 28b, 30 to reduce friction when the turbine blade assembly 6 rotates relative to the upper collar 8.

A similar arrangement is provided towards the bottom of the turbine blade assembly 6. As such, the lower collar 10 is in two parts and includes a first part 10a and a second part 10b which are secured together in a conventional manner (e.g. via screws or "nut and bolt" arrangement) about a portion of the post 4. Each of the lower collar parts 10a, 10b define on their upper portions a frustoconical bearing formed by a first bearing part 32a and a second bearing part 32b, which together engage a corresponding, inwardly facing, frustoconical upper portion 34 of the turbine blade assembly 6. A rotating element bearing (not shown) is located between the corresponding frustoconical bearing surfaces 32a, 32b, 34 to reduce friction when the turbine blade assembly 6 rotates relative to the lower collar 10.

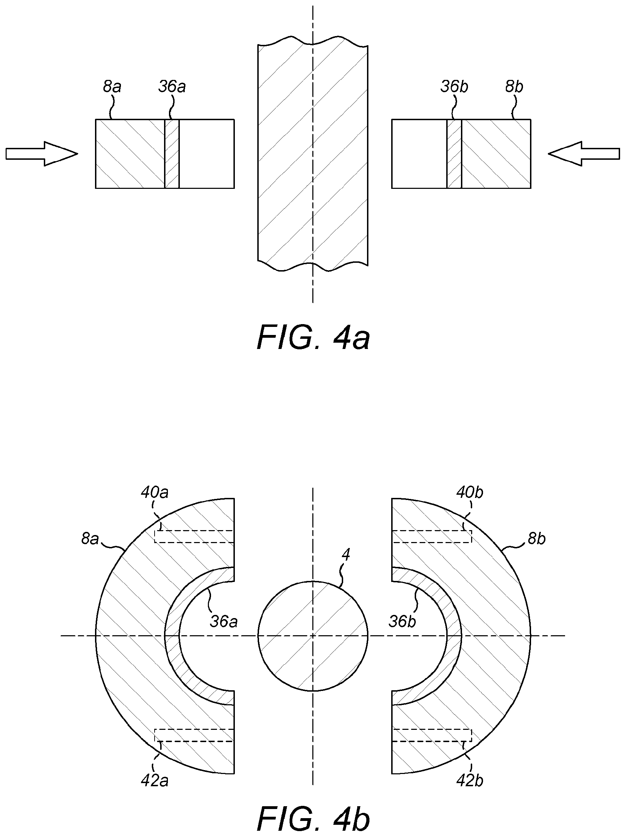

Figures 4a and 4b show an inner sleeve 36a, 36b which is located between the collars 8, 10 (only the sleeve associated with the upper collar 8 is shown in the Figures) such that the collars 8, 10 form a tight fit around the post 4.

As can be seen in the Figures, the inner sleeve part 36a is semi-annular and has an internal diameter which corresponds to the outer diameter of the post 4. In this way, the inner sleeve part 36a engages a semi-circular portion of the outer surface of the post 4. Additionally, the inner sleeve part 36a has an external diameter which corresponds to the internal diameter of the collar part 8a. In this way, the inner sleeve fits snugly inside the collar part 8a.

The other inner sleeve part 36b has a corresponding relationship with the other upper collar part 8b.

An arrangement which utilises a collar and inner sleeve, a common collar may be used with a variety of different posts 4, simply by selecting an appropriate inner sleeve.

Also shown in Figure 4b, each collar part 8a, 8b, 10a, 10b includes internal bores 40a, 40b, 42a, 42b which have recessed end portions. These bores 40a, 40b, 42a, 42b permit the collar parts 8a, 8b, 10a, 10b to be coupled together via conventional fixings, such as screws or a "nut and bolt" arrangement, wherein the fixings are wholly retained within the collar parts 8a, 8b, 10a, 10b and do not project from them.

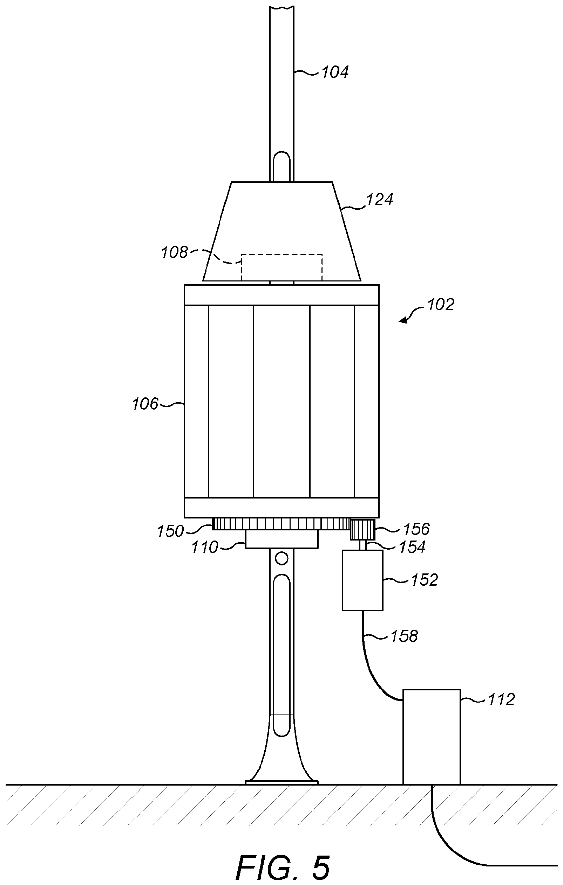

Figure 5 shows a second embodiment of the invention. In this embodiment, the wind turbine is similar to the turbine shown in Figure 1 and described above, with the exception that the electrical energy generator is located externally of the lower collar. For ease of reference, the features shown in Figure 5 which correspond to the features shown in Figure 1 will have the same reference numerals, but with a preceding "1" or "10". Thus, upper collar 8 in Figure 1 becomes upper collar 108 and so on.

Accordingly, Figure 5 shows a wind turbine apparatus 102 attached to a post 104 forming part of a street light. The wind turbine apparatus 102 comprises a two-part turbine blade assembly 106 rotatably coupled to an upper two-part collar 108 and a lower two-part collar 110.

A lower body portion of the turbine blade assembly 106 carries a drive gear wheel 150. Coupled to this is an electrical energy generator 152 comprising a rotor shaft 154 extending from a body of the generator 152 and a rotor gear wheel 156 secured to a distal end of the rotor shaft 154. The rotor gear wheel 156 is meshed with the drive gear wheel 150 carried by the turbine blade assembly 106, such that rotation of the turbine blade assembly 106 by moving or displaced air causes a corresponding rotation of the drive gear wheel 150. This in turn causes a rotation of the rotor gear wheel 156 and the rotor shaft 154. Rotation of the rotor shaft 154 within the body of the electrical energy generator causes electrical energy to be generated in the conventional way.

The electrical energy generated by the electrical energy generator 152 is transferred to a rechargeable battery arrangement 112 via an electrical cable 158.

The skilled person will appreciate that in this embodiment, there will be brackets supporting the electrical generator, which may either be coupled to the post 104 or to the stationary lower collar 110 and a housing enclosing the generator. These are not shown for reasons of clarity.

Studies have established a correlation between vehicle speed and the associated wind speed generated by the movement of the vehicle. These are shown in the following Tables:

Table 1

| Wind velocity generated by an average-sized car | | |
|---|---|---|
| MPH | M/S | Wind Velocity(m/s) |
| 50 | 22.4 | 5.4 |
| 60 | 26.8 | 5.9 |
| 70 | 31.2 | 6 |

Table 2

| Wind velocity generated by a large car, such as an MPV or SUV | | |
|---|---|---|
| MPH | M/S | Wind Velocity (m/s) |
| 50 | 22.4 | 5.8 |
| 60 | 26.8 | 6.22 |
| 70 | 31.2 | 6.78 |

Table 3

| Wind velocity generated by a large vehicle, such as a bus or HGV (lorry) | | |
|---|---|---|
| MPH | M/S | Wind Velocity(m/s) |
| 50 | 22.4 | 7.77 |
| 60 | 26.8 | 8.22 |
| 70 | 31.2 | 8.55 |

From the above average generated wind velocities, it is possible to estimate the power that may be generated by the wind turbines of the present invention according to the following equation:

$$\text{Power} = \text{constant} \times (\text{air velocity})^3 \times \text{air density} \times \text{collection area}$$

The wind turbine shown in the Figures and described hereinabove had a collection area of 94.24m$^2$, the constant is 0.5, the air density at sea level is 1.875 and the generated wind velocity is based on an average-sized car travelling at 60MPH or 26.9 m/s. Accordingly:

$$\text{Power} = 0.5 \times (5.9)^3 \times 1.875 \times 94.24$$

Power = 18.15kW.

In other words, working at 100% efficiency, each wind turbine can generate 435.49kWh per day. Allowing for less than 100% efficiency, each wind turbine could generate 217.74kWh at 50% efficiency or 130.65kWh at 30% efficiency.

The above calculation assumes an installation at the side of a single carriageway. However, if each wind turbine is installed between opposing carriageways as shown in Figure 2, the effective wind speed that impacts the turbine blade assembly is doubled. This would generate a power output from the wind turbine of 145.16kW, as the generated wind velocity is cubed, so a doubling of the generated wind velocity results in an 8-fold increase in power generated.

This results in a daily (24 hour) power output of 3.48MWh. Again, assuming less than 100% efficiency, this would equate to a daily power output of 1.74MWh at 50% efficiency or 1.05 MWh at 30% efficiency.

In order to validate the average speed assumptions, data was collected for traffic flow between Junctions 1&2 (both Eastbound and Westbound) of the M2 motorway in the UK and between Junctions 2&3 (both Eastbound and Westbound) of the M2 motorway in the UK.

The data showed the following average vehicle speeds across all four of the measured areas:

| Time | Average vehicle speed (m/s) |
|------|------------------------------|
| 0700 | 28.77 |
| 1200 | 30.01 |
| 1800 | 29.58 |
| 2200 | 23.33 |

This indicates that the assumed speed for the above calculations (26.8m/s) is a reasonable assumption.

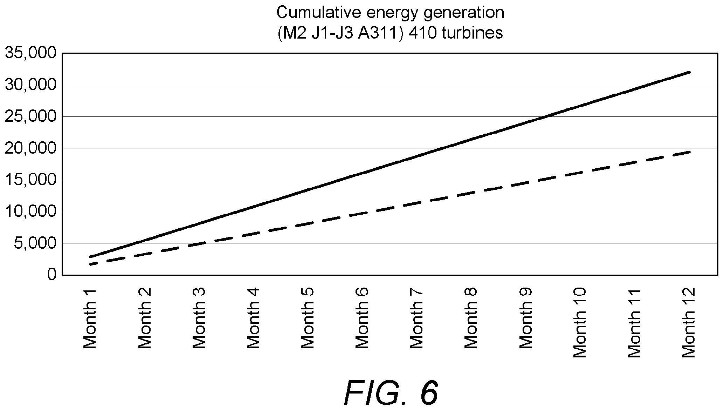

There are 410 street lamps between Junctions 1 and 3 of the M2 motorway. Assuming that a wind turbine according to the invention is installed on each of these street lamps, the graph shown in Figure 6 indicates the annual power generation that may be possible, where the Y axis indicates the generated power in MWh. In the graph, the lower line is the power generated assuming a 30% efficiency and the upper line is the power generated assuming a 50% efficiency.

Accordingly, over the course of a year, the 410 wind turbines could generate 32.1GWh at 50% efficiency or 19.2GWh at 30% efficiency.

## Claims

1. A wind turbine comprising a pair of two-part collars (8,10); a two-part turbine blade assembly,

   wherein the two parts (6) are coupled together and the turbine blade assembly is rotatably coupled to each of the collars; and an electrical generator (152) comprising a rotor and a stator,
   wherein the electrical generator is operatively coupled to the turbine blade assembly such that rotation of the turbine blade assembly relative to the collar results in a corresponding rotation of the rotor; **characterised in that** the wind turbine further includes an inner spacer (36a,36b) located internally of each collar.

2. A wind turbine according to Claim 1, wherein the wind turbine includes a bearing arrangement (28a,28b,32a,32b) between each collar and the turbine blade assembly.

3. A wind turbine according to Claim 2, wherein the bearing arrangement includes a rolling-element bearing.

4. A wind turbine according to any of Claims 1 to 3, wherein each part of the two-part collar includes a recessed fixing element.

5. A wind turbine according to any of Claims 1 to 4, wherein the turbine blade assembly defines an axis of rotation and includes two or more blades which project outwardly away from the axis of rotation.

6. A wind turbine according to Claim 5, wherein the turbine blade assembly includes an upper body portion and a lower body portion and the blades are located between the upper and lower body portions.

7. A wind turbine according to Claim 5 or Claim 6, wherein the turbine blade assembly includes a central cylindrical body portion and the blades (22) project outwardly from the central cylindrical body portion.

8. A wind turbine according to any of Claims 5 to 7, wherein each blade defines a plane which is angled with respect to a radius from the axis of rotation, optionally wherein the plane defined by each blade subtends an angle from the corresponding radius which is from 10° to 75°.

9.  A wind turbine according to any of Claims 5 to 8, wherein each blade is substantially planar.

10. A wind turbine according to any of Claims 1 to 9, wherein the turbine blade assembly carries a drive gear (150), the electrical generator rotor includes a rotor gear wheel (156), and the rotor gear wheel is meshed with the turbine blade assembly drive gear.

11. A wind turbine according to any of Claims 1 to 10, wherein the turbine includes a gearbox located between the turbine blade assembly and the electrical generator.

12. A wind turbine according to any of Claims 1 to 11, wherein the electrical generator includes an electrical output connected to an electrical energy storage arrangement; optionally wherein the electrical energy storage arrangement comprises one or more rechargeable batteries (112).

13. A wind turbine according to any of Claims 1 to 12, wherein the turbine further includes a housing body (124) coupled to the collar, optionally wherein the housing body houses one or more sensors.

14. An item of street furniture comprising a vertical post and a wind turbine according to any of Claims 1 to 13, wherein a first part of each two-part collar is located on one part of the post and a second part of each two-part collar is located on an opposite part of the post.

15. An array of items of street furniture, wherein the array includes two or more items of street furniture as defined Claim 14; the array includes a single electrical energy storage arrangement and each of the electrical generators includes an electrical output which is connected to the electrical energy storage arrangement.


**Patentansprüche**

1.  Windturbine, umfassend ein Paar zweiteilige Kragen (8, 10);
    eine zweiteilige Turbinenschaufelanordnung,

    wobei die zwei Teile (6) miteinander gekoppelt sind und die Turbinenschaufelanordnung drehbar mit jedem der Kragen gekoppelt ist; und einen elektrischen Generator (152) umfassend einen Rotor und einen Stator,
    wobei der elektrische Generator betriebsmäßig mit der Turbinenschaufelanordnung gekoppelt ist, so dass Drehung der Turbinenschaufelanordnung relativ zu dem Kragen in einer entsprechenden Drehung des Rotors resultiert; **dadurch gekennzeichnet, dass** die Windturbine ferner ein inneres Distanzstück (36a, 36b) beinhaltet, das im Inneren jedes Kragens befindlich ist.

2.  Windturbine nach Anspruch 1, wobei die Windturbine eine Lageranordnung (28a, 28b, 32a, 32b) zwischen jedem Kragen und der Turbinenschaufelanordnung beinhaltet.

3.  Windturbine nach Anspruch 2, wobei die Lageranordnung ein Wälzlager beinhaltet.

4.  Windturbine nach einem der Ansprüche 1 bis 3, wobei jeder Teil des zweiteiligen Kragens ein ausgespartes Befestigungselement beinhaltet.

5.  Windturbine nach einem der Ansprüche 1 bis 4, wobei die Turbinenschaufelanordnung eine Drehachse definiert und zwei oder mehr Schaufeln beinhaltet, die von der Drehachse weg nach außen vorstehen.

6.  Windturbine nach Anspruch 5, wobei die Turbinenschaufelanordnung einen oberen Körperabschnitt und einen unteren Körperabschnitt beinhaltet und die Schaufeln zwischen dem oberen und unteren Körperabschnitt befindlich sind.

7.  Windturbine nach Anspruch 5 oder Anspruch 6, wobei die Turbinenschaufelanordnung einen zentralen zylindrischen Körperabschnitt beinhaltet und die Schaufeln (22) von dem zentralen zylindrischen Körperabschnitt nach außen vorstehen.

**8.** Windturbine nach einem der Ansprüche 5 bis 7, wobei jede Schaufel eine Ebene definiert, die in Bezug auf einen Radius von der Drehachse angewinkelt ist, optional, wobei die von jeder Schaufel definierte Ebene einen Winkel von dem entsprechenden Radius bestreicht, der 10 ° bis 75 ° beträgt.

**9.** Windturbine nach einem der Ansprüche 5 bis 8, wobei jede Schaufel im Wesentlichen planar ist.

**10.** Windturbine nach einem der Ansprüche 1 bis 9, wobei die Turbinenschaufelanordnung ein Antriebszahnrad (150) trägt, der elektrische Generatorrotor ein Rotorzahnrad (156) beinhaltet und das Rotorzahnrad mit dem Antriebszahnrad der Turbinenschaufelanordnung in Eingriff steht.

**11.** Windturbine nach einem der Ansprüche 1 bis 10, wobei die Turbine ein Getriebe beinhaltet, das sich zwischen der Turbinenschaufelanordnung und dem elektrischen Generator befindet.

**12.** Windturbine nach einem der Ansprüche 1 bis 11, wobei der elektrische Generator einen elektrischen Ausgang beinhaltet, der mit einer elektrischen Energiespeicheranordnung verbunden ist; optional, wobei die elektrische Energiespeicheranordnung eine oder mehrere wiederaufladbare Batterien (112) umfasst.

**13.** Windturbine nach einem der Ansprüche 1 bis 12, wobei die Turbine ferner einen Gehäusekörper (124) beinhaltet, der mit dem Kragen gekoppelt ist, optional, wobei der Gehäusekörper einen oder mehrere Sensoren aufnimmt.

**14.** Straßenmöbelgegenstand, umfassend einen vertikalen Pfosten und eine Windturbine nach einem der Ansprüche 1 bis 13, wobei sich ein erster Teil jedes zweiteiligen Kragens auf einem Teil des Pfostens befindet und ein zweiter Teil jedes zweiteiligen Kragens auf einem gegenüberliegenden Teil des Pfostens befindet.

**15.** Gruppierung von Straßenmöbeln, wobei die Gruppierung zwei oder mehr Straßenmöbelgegenstände wie von Anspruch 14 definiert beinhaltet; die Gruppierung eine einzige elektrische Energiespeicheranordnung beinhaltet und jeder der elektrischen Generatoren einen elektrischen Ausgang, der mit der elektrischen Energiespeicheranordnung verbunden ist, beinhaltet.

## Revendications

**1.** Éolienne comprenant une paire de cols constituée de deux parties (8, 10) ; un ensemble de pales de turbine constitué de deux parties, dans lequel les deux parties (6) sont couplées ensemble et l'ensemble de pales de turbine est couplé de manière rotative à chaque col ; et un générateur électrique (152) doté d'un rotor et d'un stator, dans lequel le générateur électrique est fonctionnellement couplé à l'ensemble de pales de turbine de sorte que la rotation de l'ensemble de pales de turbine par rapport au col entraîne une rotation correspondante du rotor ; **caractérisé en ce que** l'éolienne comporte en outre une entretoise interne (36a, 36b) située à l'intérieur de chaque col.

**2.** Éolienne selon la revendication 1, dans lequel l'éolienne est dotée d'un montage de roulements (28a, 28b, 32a, 32b) situé entre chaque col et l'ensemble de pales de turbine.

**3.** Éolienne selon la revendication 2, dans lequel le montage de roulements est doté d'un palier à éléments roulants.

**4.** Éolienne selon l'une quelconque des revendications 1 à 3, dans lequel chaque partie du col constitué de deux parties est dotée d'un élément de fixation encastré.

**5.** Éolienne selon l'une quelconque des revendications 1 à 4, dans lequel l'ensemble de pales de turbine définit un axe de rotation et est doté de deux ou de plusieurs pales qui font saillie vers l'extérieur à distance de l'axe de rotation.

**6.** Éolienne selon la revendication 5, dans lequel l'ensemble de pales de turbine est doté d'une partie de corps supérieure et d'une partie de corps inférieure et les pales sont situées entre les parties de corps supérieure et inférieure.

**7.** Éolienne selon soit la revendication 5, soit la revendication 6, dans lequel l'ensemble de pales de turbine est doté d'une partie de corps cylindrique centrale et les pales (22) font saillie vers l'extérieur par rapport à la partie du corps cylindrique centrale.

**8.** Éolienne selon l'une quelconque des revendications 5 à 7, dans lequel chaque pale définit un plan qui est incliné par rapport à un rayon qui part de l'axe de rotation, éventuellement dans lequel le plan défini par chaque pale sous-tend un angle par rapport au rayon correspondant qui est de 10° à 75°.

9. Éolienne selon l'une quelconque des revendications 5 à 8, dans lequel chaque pale est sensiblement plane.

10. Éolienne selon l'une quelconque des revendications 1 à 9, dans lequel l'ensemble de pales de turbine porte un engrenage d'entraînement (150), le rotor du générateur électrique est doté d'une route dentée de rotor (156), et la roue dentée de rotor est en prise avec le l'engrenage d'entraînement de l'ensemble de pales de turbine.

11. Éolienne selon l'une quelconque des revendications 1 à 10, dans lequel la turbine est dotée d'un multiplicateur situé entre l'ensemble de pales de turbine et le générateur électrique.

12. Éolienne selon l'une quelconque des revendications 1 à 11, dans lequel le générateur électrique est doté d'une sortie électrique connectée à un dispositif accumulateur d'énergie électrique ; éventuellement dans lequel le dispositif accumulateur d'énergie électrique est doté d'une ou de plusieurs batteries rechargeables (112).

13. Éolienne selon l'une quelconque des revendications 1 à 12, dans lequel la turbine est en outre dotée d'un corps de logement (124) couplé au col, éventuellement dans lequel le corps de logement abrite un ou plusieurs capteurs.

14. Élément de mobilier urbain comprenant un mât vertical et une éolienne selon l'une quelconque des revendications 1 à 13, dans lequel une première partie de chaque col constitué de deux parties est située sur l'un des côtés du mât et une deuxième partie de chaque col constitué de deux parties est située sur le côté opposé du mât.

15. Ensemble d'éléments de mobilier urbain, dans lequel l'ensemble comprend deux ou plusieurs éléments de mobilier urbain tels que définis selon la revendication 14 ; l'ensemble comprend un seul dispositif accumulateur d'énergie électrique et chaque générateur électrique est doté d'une sortie électrique qui est connectée au dispositif accumulateur d'énergie électrique.

FIG. 1

EP 3 918 196 B1

FIG. 2

**FIG. 3**

FIG. 4a

FIG. 4b

## FIG. 5

Cumulative energy generation
(M2 J1-J3 A311) 410 turbines

*FIG. 6*

EP 3 918 196 B1

**EP 3 918 196 B1**

**REFERENCES CITED IN THE DESCRIPTION**

**Patent documents cited in the description**

- US 2014252773 A1
- NL 1037011 C
- GB 2496466 A
- US 2011107684 A1